# FASCICULE DE BREVET EUROPEEN

(11) **EP 3 010 769 B1**
(45) Date de publication et mention de la délivrance du brevet: **06.09.2017**
(21) Numéro de dépôt: 14732147.5
(22) Date de dépôt: 16.06.2014
(51) Int. Cl.: B60R 25/021

(54) **ANTIVOL DE DIRECTION POUR VEHICULE AUTOMOBILE À SUPERCONDAMNATION ET PROCEDE DE MONTAGE ASSOCIE**
LENKSÄULENDIEBSTAHLSCHUTZ MIT BLOCKIERMECHANISMUS FÜR EIN KRAFTFAHRZEUG UND VERFAHREN FÜR DESSEN ZUSAMMENBAU
ANTITHEFT DEVICE WITH BLOCKING MECHANISM FOR MOTOR VEHICLE AND METHOD FOR ITS ASSEMBLY

(30) Priorité: 19.06.2013 FR 1355759
(43) Date de publication de la demande: 27.04.2016
(73) Titulaire: U-Shin France, 94000 Créteil (FR)
(72) Inventeur: PERRIN, Christophe, F-58000 Nevers (FR); RENAUD, Jean-Pierre, F-58000 Nevers (FR)
(74) Mandataire: Gaillarde, Frédéric F. Ch.
(86) Numéro de dépôt international: PCT/EP2014/062600
(87) Numéro de publication internationale: WO 2014/202547

(56) Documents cités:
- EP-A2- 2 025 567
- WO-A1-2013/092824
- FR-A1- 2 776 976
- FR-A1- 2 777 521
- FR-A1- 2 964 350

## Description

### DOMAINE TECHNIQUE

La présente invention concerne un antivol destiné à sécuriser un mécanisme de direction de véhicule. Plus particulièrement, la présente invention concerne un antivol mettant en oeuvre un pêne mobile à même d'être verrouillé par un moyen de supercondamnation. L'invention concerne également un procédé de montage de l'antivol.

### ETAT DE LA TECHNIQUE

Les antivols comportent un pêne monté mobile dans un corps d'antivol, entre une position décondamnée dans laquelle il est destiné à être disposé à distance d'une colonne de direction, et une position condamnée dans laquelle il est destiné à bloquer la colonne. Le pêne est commandé en déplacement par l'intermédiaire d'un verrou rotatif intégré dans le corps d'antivol.

Certains antivols à sécurité renforcée comprennent en outre un moyen de supercondamnation apte à bloquer le pêne en position condamnée, en cas de tentative d'effraction. Une personne mal intentionnée peut en effet décider d'arracher le verrou pour accéder au pêne, afin de le désactiver en vue de libérer la rotation de la colonne de direction. La présence des moyens de supercondamnation permet de maintenir le pêne dans sa position condamnée, de sorte que la colonne demeure malgré tout bloquée en rotation. Les moyens de supercondamnation sont par exemple agencés dans un support rapporté au corps de l'antivol. Un antivol selon le préambule de la revendication 1 est divulgué par FR2964350A. Un inconvénient des dispositifs antivol de l'art antérieur comportant un moyen de supercondamnation est l'encombrement résultant de l'assemblage des différentes pièces d'autant plus si on isole les pièces pour les protéger contre des tentatives d'effraction.

En outre, l'assemblage des différentes pièces nécessite l'utilisation de lignes de production spécifiques, par exemple pour sertir les pièces entre elles, ce qui augmente les coûts et le temps de fabrication.

### EXPOSE DE L'INVENTION

Un des buts de la présente invention est de proposer un antivol présentant un moyen de supercondamnation moins encombrant que ceux de l'état de la technique, plus facile et moins couteux à mettre en oeuvre tout en présentant une grande résistance face aux attaques de personnes malveillantes.

A cet effet, l'invention à pour objet un antivol de direction pour véhicule automobile à supercondamnation comprenant :
- un guide-pêne,
- un pêne monté mobile dans le guide-pêne entre une position décondamnée dans laquelle il est destiné à être disposé à distance d'une colonne de direction et une position condamnée dans laquelle il est destiné à bloquer ladite colonne, et
- un moyen de supercondamnation comportant un élément de blocage configuré pour bloquer le pêne en position condamnée, ledit élément de blocage étant sollicité en torsion et en translation vers ledit pêne et reçu dans un logement du guide-pêne à distance du pêne en position décondamnée.

Le moyen de supercondamnation comporte en outre une plaque de fermeture coopérant par assemblage mécanique avec le logement du guide-pêne pour retenir le pivotement et la translation de la plaque de fermeture par rapport au guide-pêne et pour entraîner la sollicitation en translation et en torsion dudit élément de blocage.

L'assemblage mécanique de la plaque de fermeture dans le logement du guide-pêne est ainsi obtenu par la conformation du guide-pêne et de la plaque de fermeture et leurs mouvements relatifs successifs. Cet assemblage mécanique peut ainsi être réalisé manuellement ou automatiquement, de manière simple et reproductible, et sans nécessiter d'outils spécifiques couteux, tels que pour un sertissage. Les moyens de supercondamnation sont ainsi intégrés dans le guide-pêne sans augmenter l'encombrement de l'antivol et sans support rapporté pour loger les moyens de supercondamnation.

Selon un exemple de réalisation, la plaque de fermeture et le logement du guide-pêne présentent des moyens d'assemblage mécanique complémentaires configurés pour assembler la plaque de fermeture dans le logement par pivotement et translation de la plaque de fermeture dans le logement du guide-pêne.

Selon un exemple de réalisation, les moyens d'assemblage mécanique complémentaires sont configurés pour coopérer avec l'élément de blocage de sorte que le rappel élastique en torsion de l'élément de blocage entraîne le pivotement de la plaque de fermeture vers la position assemblée de la plaque de fermeture.

On utilise ainsi la sollicitation en torsion de l'élément de blocage pour finaliser le montage de la plaque de fermeture dans le logement. A la fin de l'assemblage mécanique, grâce au rappel élastique de l'élément de blocage, la plaque de fermeture est retenue à la fois en translation et en torsion sans étape supplémentaire.

Selon un exemple de réalisation, la plaque de fermeture comporte au moins une patte anti-translation s'étendant dans l'axe de translation de l'élément de blocage, la patte anti-translation présentant une protubérance transversale coopérant avec une butée axiale ménagée dans le logement du guide-pêne.

Selon un exemple de réalisation, une rainure de guidage en pivotement vers la position assemblée de la plaque de fermeture est ménagée dans le logement.

Selon un exemple de réalisation, la rainure de guidage en pivotement coopère avec la patte anti-translation lors de l'assemblage mécanique de la plaque de fermeture dans le logement du guide-pêne, la butée axiale étant agencée en fin de course de la rainure de guidage en pivotement.

Selon un exemple de réalisation, la plaque de fermeture comporte au moins un ergot anti-pivotement coopérant avec une encoche complémentaire ménagée dans le logement du guide-pêne.

Selon un exemple de réalisation, l'encoche présente une ouverture angulaire délimitée par une butée radiale permettant le pivotement de l'ergot anti-pivotement jusqu'à la butée radiale sous l'effet de la sollicitation en torsion lors de l'assemblage mécanique de la plaque de fermeture dans le logement du guide-pêne.

Selon un exemple de réalisation, la butée radiale coopère avec l'ergot anti-pivotement lorsque la patte anti-translation coopère avec la butée axiale.

Selon un exemple de réalisation, en position assemblée, l'ergot anti-pivotement est superposé avec un nez radial de l'élément de blocage.

Selon un exemple de réalisation, l'élément de blocage est fixé à la plaque de fermeture avec une orientation prédéterminée par rapport à l'angle souhaité de précontrainte en torsion.

Selon un exemple de réalisation, l'antivol comprend un corps d'antivol, un module antivol comportant le guide-pêne, le pêne et un moyen de supercondamnation, ledit module antivol étant logé dans le corps d'antivol et le corps d'antivol bloquant la plaque de fermeture contre le logement du guide-pêne.

Ainsi, une fois assemblé, la plaque de fermeture est prise en sandwich entre le corps d'antivol et le guide-pêne. Elle est alors bloquée contre le logement du guide-pêne. La plaque de fermeture est ainsi rendue invisible et inaccessible, ce qui renforce la protection de l'antivol.

L'invention a aussi pour objet un procédé de montage d'un antivol tel que décrit précédemment, dans lequel on assemble mécaniquement la plaque de fermeture au logement du guide-pêne pour retenir le pivotement et la translation de la plaque de fermeture par rapport au guide-pêne et pour entraîner la sollicitation en translation et en torsion dudit élément de blocage.

Selon un exemple de réalisation, on assemble la plaque de fermeture dans le logement par pivotement et translation de la plaque de fermeture dans le logement du guide-pêne. On réalise ainsi un assemblage mécanique de type baïonnette.

Selon un exemple de réalisation, le procédé de montage comporte :
- une première étape dans laquelle on tourne et on pousse la plaque de fermeture vers le guide-pêne pour entraîner la sollicitation en translation et en torsion dudit élément de blocage, en pivotant la plaque de fermeture au-delà de la sollicitation en torsion souhaitée,
- une deuxième étape dans laquelle on relâche la contrainte en pivotement en maintenant la contrainte en compression pour autoriser le pivotement de la plaque de fermeture dans le logement sous l'effet de la sollicitation en torsion jusqu'à bloquer la plaque de fermeture en pivotement et en translation.

Selon un exemple de réalisation, le procédé de montage comporte une troisième étape dans laquelle on insère le module d'antivol assemblé dans le corps d'antivol.

### DESCRIPTION SOMMAIRE DES DESSINS

D'autres avantages et caractéristiques apparaîtront à la lecture de la description d'un exemple non limitatif de réalisation de l'invention, ainsi que sur les figures annexées sur lesquelles :
- la figure 1 représente une vue en perspective d'éléments d'un antivol en cours de montage,
- la figure 2 représente des éléments d'un module de verrouillage de l'antivol de la figure 1 à l'état désassemblé,
- la figure 3 représente une vue d'une face interne d'une plaque de fermeture du module de verrouillage de la figure 2,
- la figure 4 représente une vue d'un détail agrandi illustrant une patte anti-translation de la plaque de fermeture coopérant avec une butée axiale du logement du guide-pêne représenté en transparence,
- la figure 5 représente une vue d'un détail agrandi, vue en coupe, de la patte anti-translation et du logement du guide-pêne de la figure 4,
- la figure 6 illustre le montage d'un pion de supercondamnation dans le guide-pêne,
- la figure 7 illustre l'assemblage du moyen de rappel élastique de l'élément de blocage,
- la figure 8 illustre l'assemblage de la plaque de fermeture avec l'élément de blocage,
- la figure 9 illustre le pivotement de la plaque de fermeture lors de son montage mécanique dans le logement, au-delà de la contrainte en torsion souhaitée,
- la figure 10 illustre la translation de la plaque de fermeture lors de son montage mécanique dans le logement, et
- la figure 11 illustre le module antivol à l'état assemblé.

Sur ces figures, les éléments identiques portent les mêmes numéros de référence.

### DESCRIPTION DÉTAILLÉE

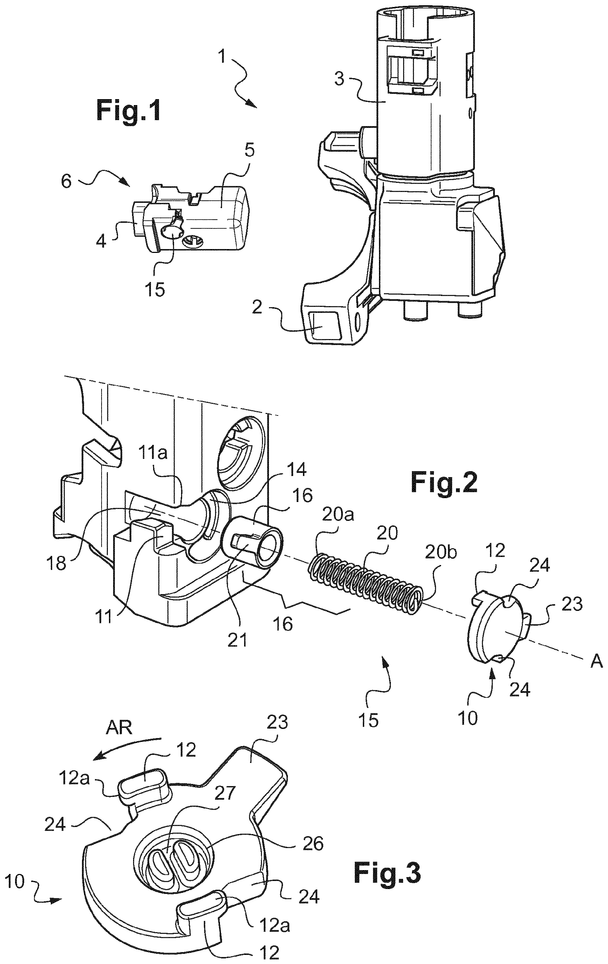

Les figures 1 à 11 illustrent un exemple de réalisation d'un antivol 1 de direction pour véhicule automobile à supercondamnation. L'antivol 1 comporte un corps d'antivol 3 présentant deux demi-colliers 2, dont un seul est représenté sur la figure 1. Les demi-colliers 2 sont configurés pour s'assembler autour d'une colonne de direction (non représentée).

Le corps d'antivol 3 loge un module antivol 6 comprenant un moyen de verrouillage de la colonne de direction et un moyen de supercondamnation 15 agencé pour verrouiller le moyen de verrouillage en position condamnée suite à une tentative d'effraction de l'antivol 1. Le corps d'antivol 3 est par exemple en matériau « Zamak » de manière à présenter une bonne résistance mécanique en position sur la colonne, protégeant les moyens de verrouillage et de supercondamnation.

Le moyen de verrouillage comporte un pêne 4 monté coulissant dans le corps d'antivol 3, via un guide-pêne 5 de l'antivol 1, entre une position décondamnée dans laquelle il est en position escamotée arrière, à distance de la colonne de direction et une position condamnée (figure 1) dans laquelle il est destiné à bloquer la colonne en faisant saillie du demi-collier 2 pour coopérer classiquement par emboîtement avec un élément de la colonne de direction. Le moyen de verrouillage comporte en outre un moyen d'entraînement (non visible) du pêne 4 apte à entraîner le pêne 4 en position condamnée ou décondamnée. Le déplacement du moyen d'entraînement est commandé par la rotation d'un rotor de verrou.

Mieux visible sur les figures 2 et 3, le moyen de supercondamnation 15 comporte un élément de blocage 16 et une plaque de fermeture 10.

L'élément de blocage 16 est configuré pour bloquer le pêne 4 en position condamnée et pour être à distance du pêne 4 en position décondamnée.

En position décondamnée, l'élément de blocage 16 est reçu dans un logement 18 débouchant du guide-pêne 5 et est sollicité en torsion et en translation vers le pêne 4.

L'élément de blocage 16 comporte par exemple un pion de supercondamnation 25 et un moyen de rappel élastique 20.

Le pion de supercondamnation 25 présente par exemple une forme cylindrique dont la base comporte un nez radial 21. Le pion de supercondamnation 25 est sollicité en torsion et en translation vers le pêne 4 par le moyen de rappel élastique 20 et est retenu en position passive par un organe de retenue. L'organe de retenue appuie sur le nez radial 21 de l'élément de blocage 16 pour le retenir à distance du pêne 4 et il est retiré en cas de tentative de désolidarisation du verrou.

Le logement 18 est conformé pour coopérer avec l'élément de blocage 16 en le guidant vers le pêne 4 par la succession d'une translation et d'une rotation, ou inversement, consécutivement au retrait d'un organe de retenue pour bloquer le pêne 4 en position condamnée. Une fois que l'élément de blocage 16 s'est déplacé de ces deux déplacements successifs, il ne peut plus retourner simplement dans la position initiale passive. Deux déplacements successifs inverses doivent être réalisés pour désengager l'élément de blocage 16 du pêne 4, ce qui corse le désenclenchement du moyen de supercondamnation, renforçant l'inviolabilité de l'antivol 1.

Le moyen de rappel élastique 20 comporte par exemple un ressort, tel qu'hélicoïdal, dont une première extrémité 20a est reçue et assemblée dans le pion de supercondamnation 25 et la deuxième extrémité 20b est fixée à une face interne de la plaque de fermeture 10.

Comme on peut le voir sur la figure 2, la deuxième extrémité 20b du moyen de rappel élastique 20 est fixée au centre d'une face interne de la plaque de fermeture 10. A cet effet, la plaque de fermeture 10 comporte par exemple un renfoncement central 26 en forme de disque pour centrer le moyen de rappel élastique 20 et un plot central 27 cylindrique fendu. La deuxième extrémité 20b du moyen de rappel élastique 20 est fixée dans la fente du plot central 27. Le même dispositif est par exemple prévu dans le fond du pion de supercondamnation 25 pour maintenir la première extrémité 20a du moyen de rappel élastique 20. L'élément de blocage 16 est fixé à la plaque de fermeture 10 avec une orientation prédéterminée par rapport à l'angle souhaité de précontrainte en torsion.

La plaque de fermeture 10 coopère par assemblage mécanique avec le logement 18 du guide-pêne 5 pour retenir le pivotement et la translation de la plaque de fermeture 10 par rapport au guide-pêne 5 et pour entraîner la sollicitation en translation et en torsion de l'élément de blocage 16.

Pour cela, la plaque de fermeture 10 et le logement 18 du guide-pêne 5 présentent par exemple des moyens d'assemblage mécanique complémentaires configurés pour assembler la plaque de fermeture 10 dans le logement 18 par pivotement et translation de la plaque de fermeture 10 dans le logement 18 du guide-pêne 5.

L'assemblage mécanique de la plaque de fermeture 10 dans le logement 18 du guide-pêne 5 est ainsi obtenu par la conformation du guide-pêne 5 et de la plaque de fermeture 10 et leurs mouvements relatifs successifs.

Les moyens d'assemblage mécanique complémentaires sont par exemple configurés pour coopérer avec l'élément de blocage 16 de sorte que le rappel élastique en torsion de l'élément de blocage 16 entraîne le pivotement de la plaque de fermeture 10 vers la position assemblée dans laquelle la plaque de fermeture 10 est immobilisée en pivotement et translation. Ainsi, au cours du montage mécanique, l'élément de blocage 16 est tourné manuellement ou automatiquement dans un premier sens de rotation R au-delà de la contrainte en torsion souhaitée pour l'élément de rappel élastique 16. Puis, le relâchement en torsion de l'élément de rappel 16 le fait pivoter dans le sens de rotation contraire AR jusqu'à la position assemblée de la plaque de fermeture 10.

La plaque de fermeture 10, par exemple en acier, présente par exemple une forme générale de disque coopérant avec une ouverture du logement 18 de forme générale complémentaire cylindrique.

Selon un exemple de réalisation des moyens d'assemblage mécanique complémentaires, visibles sur les figures 3 à 5, la plaque de fermeture 10 comporte au moins une patte anti-translation 12 s'étendant de la portion plane de la plaque de fermeture 10, dans l'axe de translation A de l'élément de blocage 16, en direction du logement 18. L'extrémité de la patte anti-translation 12 présente une protubérance transversale 12a s'étendant vers l'avant dans le sens de rotation contraire AR de la plaque de fermeture 10 au cours du montage mécanique après le relâchement en torsion.

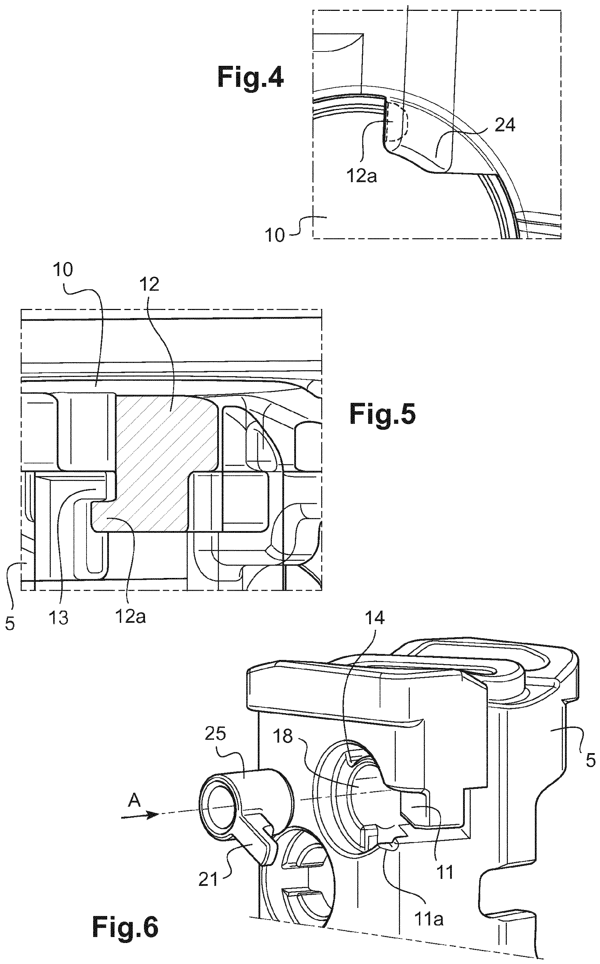

La protubérance transversale 12a coopère avec une butée axiale 13 complémentaire ménagée dans le logement 18 du guide-pêne 5 pour retenir la translation de la plaque de fermeture 10 en position assemblée (figures 4 et 5). La butée axiale 13 est formée dans un épaulement de l'ouverture du logement 18.

Pour faciliter le guidage en pivotement de la plaque de fermeture 10 vers l'état assemblé, une rainure de guidage en pivotement 14 peut être ménagée dans le logement 18. On prévoit par exemple que la rainure de guidage en pivotement 14 coopère avec la patte anti-translation 12 lors de l'assemblage mécanique de la plaque de fermeture 10 dans le logement 18 du guide-pêne 5. La butée axiale 13 est agencée en fin de course de la rainure de guidage en pivotement 14, de sorte qu'à la fin du pivotement de la plaque de fermeture 10, la protubérance transversale 12a coopère avec la butée axiale 13.

La plaque de fermeture 10 comporte également au moins un ergot anti-pivotement 23 coopérant avec une encoche 11 complémentaire ménagée dans le logement 18 du guide-pêne 5 (figure 2) pour empêcher le pivotement de la plaque de fermeture 10 en position assemblée.

L'ergot anti-pivotement 23 s'étend radialement de la portion plane en forme de disque de la plaque de fermeture 10.

L'encoche 11 s'étend axialement dans l'axe de translation A de l'élément de blocage 16, sensiblement perpendiculairement au plan de la portion plane de la plaque de fermeture 10, pour présenter une butée radiale 11a. La butée radiale 11a empêche le pivotement de l'ergot anti-pivotement 23 sous l'effet de la sollicitation en torsion de l'élément de blocage 16.

L'encoche 11 présente une ouverture angulaire délimitée par la butée radiale 11a dans le sens de rotation contraire AR de la plaque de fermeture 10 en cours de montage mécanique après le relâchement en torsion (antihoraire sur l'exemple illustré).

L'ouverture angulaire autorise le pivotement de l'ergot anti-pivotement 23 entre une première et une deuxième position angulaire.

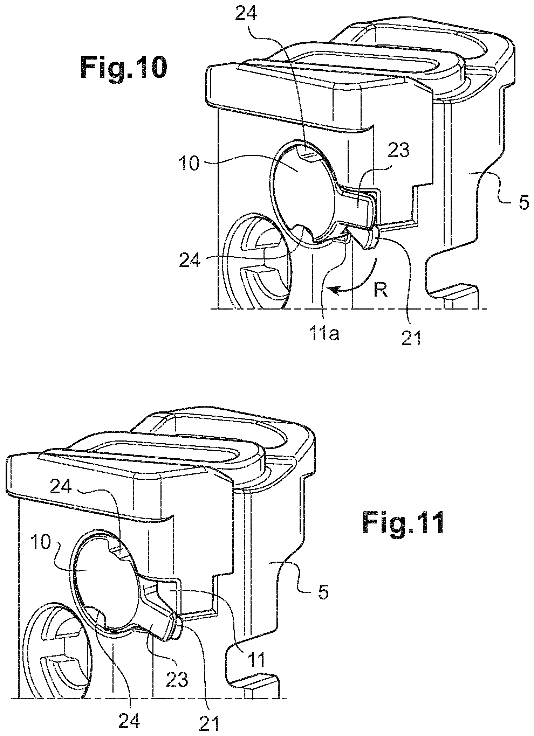

Lorsque la plaque de fermeture 10 est dans la première position angulaire (figure 10), l'élément de blocage 16 est pré-contraint au-delà de la contrainte en torsion souhaitée.

Le relâchement de la sur-contrainte en torsion fait pivoter la plaque de fermeture 10 sous l'effet de la sollicitation en torsion de l'élément de blocage 16 jusqu'à la butée radiale 11a dans la deuxième position angulaire (figure 11).

L'ergot anti-pivotement 23 joue ainsi le rôle d'indicateur de position de la plaque de fermeture 10.

L'ouverture angulaire de l'encoche 11 est par exemple de l'ordre de 20°.

Le pivotement de la plaque de fermeture 10 fait également pivoter la patte anti-translation 12 dans la rainure de guidage en pivotement 14. Ainsi, dans la deuxième position angulaire, le module antivol 6 est assemblé, l'ergot anti-pivotement 23 est en butée contre la butée radiale 11a de l'encoche 11 et la patte anti-translation 12 coopère avec la butée axiale 13 ménagée dans le logement 18 du guide-pêne 5.

On peut prévoir en outre que dans la position assemblée (figure 11), l'ergot anti-pivotement 23 de la plaque de fermeture 10 soit superposé avec le nez radial de l'élément de blocage 16. L'ergot anti-pivotement 23 présente une surface un peu supérieure à celle du nez radial 21 de l'élément de blocage 16 de sorte qu'en position assemblée, l'ergot anti-pivotement 23 protège le nez radial 21 d'éventuelles attaques. De plus, la superposition de l'ergot anti-pivotement 23 et du nez radial 21 assure du bon positionnement de la plaque de fermeture 10 en position assemblée.

On peut aussi prévoir que l'élément de blocage 16 soit fixé à la plaque de fermeture 10 en orientant l'extrémité du moyen de rappel élastique par rapport à l'ergot anti-pivotement 23 de l'angle souhaité de précontrainte en torsion.

Dans le cas où l'extrémité 20b du moyen de rappel élastique 20 est fixée au plot central 27, on prévoit d'orienter la fente du plot central 27 par rapport à l'ergot anti-pivotement 23 pour contraindre l'élément de blocage 16 de l'angle souhaité de précontrainte en torsion.

Par ailleurs, la plaque de fermeture 10 peut présenter une empreinte adaptée pour coopérer avec un outil approprié ou avec les doigts de l'opérateur pour faciliter le montage ou démontage, automatique ou manuel, de la plaque de fermeture 10. L'empreinte est par exemple formée de deux petites entailles radiales 24 diamétralement opposées, ménagées sur la circonférence de la plaque de fermeture 10.

On va maintenant décrire plus en détail les figures 6 à 11 qui représentent différentes étapes du procédé de montage de l'antivol 1.

Le pion de supercondamnation 25 est d'abord inséré dans le fond du logement 18 du guide-pêne 5 (figure 6).

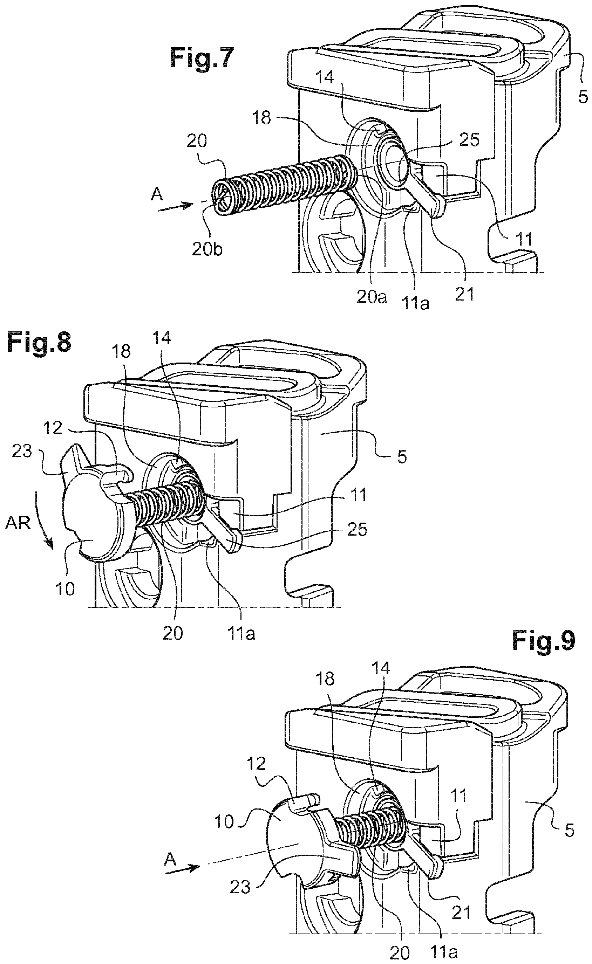

Puis, la première extrémité 20a du moyen de rappel élastique 20 est insérée et fixée au pion de supercondamnation 25 (figure 7).

Puis, la plaque de fermeture 10 est positionnée et fixée à la deuxième extrémité 20b du moyen de rappel élastique 20 (figure 8). L'élément de blocage 16 est fixé à la plaque de fermeture 10 de sorte que lorsque l'ergot anti-pivotement 23 est en butée contre la butée radiale 11a, le moyen de rappel élastique 20 est précontraint de la précontrainte en torsion souhaitée.

Puis, la plaque de fermeture 10 est tournée pour pré-contraindre le moyen de rappel élastique 20 en torsion (figures 8 et 9). La plaque de fermeture 10 et pivotée au-delà de la sollicitation en torsion souhaitée. Dans l'exemple, la plaque de fermeture 10 est tournée dans le sens de rotation antihoraire R, par exemple d'un angle de l'ordre de 200°.

Puis, la plaque de fermeture 10 est poussée dans l'axe de translation A vers le guide-pêne 5 jusqu'à son introduction dans l'ouverture du logement 18 de manière à contraindre l'élément de blocage 16 en translation par la compression du moyen de rappel élastique 20 (figure 9).

La patte anti-translation 12 est alors insérée au début de la rainure de guidage en pivotement 14 et l'ergot anti-pivotement 23 est inséré dans la première position angulaire, au début de l'ouverture angulaire de l'encoche 11, à l'opposé de la butée radiale 11a.

Puis, la sur-contrainte en pivotement de la plaque de fermeture 10 est relâchée tandis que la contrainte en compression est maintenue. La plaque de fermeture 10, pivote sous l'effet de la sollicitation en torsion par le moyen de rappel élastique 20, dans le sens de rotation horaire R dans cet exemple.

Le pivotement est guidé par la coopération de la patte anti-pivotement 12 avec la rainure de guidage en pivotement 14.

La plaque de fermeture 10 est immobilisée lorsque l'ergot anti-pivotement 23 vient en butée contre la butée radiale 11a et la protubérance transversale 12a de la patte anti-translation 12 est en prise avec la butée axiale 13.

Dans cette position assemblée du module antivol 6, la coopération entre la plaque de fermeture 10 et le logement 18 retient le pivotement et la translation de la plaque de fermeture 10 par rapport au guide-pêne 5 et entraîne la sollicitation en translation et en torsion de l'élément de blocage 16.

L'assemblage mécanique de la plaque de fermeture 10 dans le logement 18 du guide-pêne 5 permet de solliciter l'élément de blocage 16 en torsion et en translation manuellement, de manière simple et reproductible, et sans nécessiter d'outils spécifiques couteux. On utilise ainsi la sollicitation en torsion de l'élément de blocage 16 pour finaliser le montage de la plaque de fermeture 10 dans le logement 18.

Une fois assemblé, le module d'antivol 6 forme un bloc pouvant être aisément manipulé de sorte que l'étape d'assemblage du module d'antivol 6 peut être réalisée à un moment et dans un lieu différents des autres étapes d'assemblage de l'antivol 1.

Puis, on insère le module d'antivol 6 dans le corps d'antivol 3, ce dernier bloquant la plaque de fermeture 10 contre le logement 18 du guide-pêne 5 (figure 1). Une fois l'antivol 1 assemblé, la plaque de fermeture 10 est prise en sandwich entre le corps d'antivol 3 et le guide-pêne 5. Le corps d'antivol 3 bloque alors la plaque de fermeture 10 contre le logement 18 du guide-pêne 5. La plaque de fermeture 10 est ainsi rendue invisible et inaccessible, ce qui renforce la protection de l'antivol 1.

Les moyens de supercondamnation 15 sont ainsi intégrés dans le guide-pêne 5 sans augmenter l'encombrement de l'antivol 1 et sans support rapporté pour loger les moyens de supercondamnation.

## Revendications

1. Antivol de direction pour véhicule automobile à supercondamnation comprenant :
- un guide-pêne (5),
- un pêne (4) monté mobile dans le guide-pêne (5) entre une position décondamnée dans laquelle il est destiné à être disposé à distance d'une colonne de direction et une position condamnée dans laquelle il est destiné à bloquer ladite colonne,
- un moyen de supercondamnation (15) comportant un élément de blocage (16) configuré pour bloquer le pêne (4) en position condamnée, ledit élément de blocage (16) étant sollicité en torsion et en translation vers ledit pêne (4) et reçu dans un logement (18) du guide-pêne (5) à distance du pêne (4) en position décondamnée,
**caractérisé en ce que** le moyen de supercondamnation (15) comporte en outre une plaque de fermeture (10) coopérant par assemblage mécanique avec le logement (18) du guide-pêne (5) pour retenir le pivotement et la translation de la plaque de fermeture (10) par rapport au guide-pêne (5) et pour entraîner la sollicitation en translation et en torsion dudit élément de blocage (16).

2. Antivol selon la revendication 1, **caractérisé en ce que** la plaque de fermeture (10) et le logement (18) du guide-pêne (5) présentent des moyens d'assemblage mécanique complémentaires configurés pour assembler la plaque de fermeture (10) dans le logement (18) par pivotement et translation de la plaque de fermeture (10) dans le logement (18) du guide-pêne (5).

3. Antivol selon la revendication 2, **caractérisé en ce que** les moyens d'assemblage mécanique complémentaires sont configurés pour coopérer avec l'élément de blocage (16) de sorte que le rappel élastique en torsion de l'élément de blocage (16) entraîne le pivotement de la plaque de fermeture (10) vers la position assemblée de la plaque de fermeture (10).

4. Antivol selon l'une des revendications 2 ou 3, **caractérisé en ce que** la plaque de fermeture (10) comporte au moins une patte anti-translation (12) s'étendant dans l'axe de translation (A) de l'élément de blocage (16) et dont une protubérance transversale (12a) coopère avec une butée axiale (13) ménagée dans le logement (18) du guide-pêne (5).

5. Antivol selon l'une des revendications 2 à 4, **caractérisé en ce qu'**une rainure de guidage en pivotement (14) vers la position assemblée de la plaque de fermeture (10) est ménagée dans le logement (18).

6. Antivol selon les revendications 4 et 5, **caractérisé en ce que** la rainure de guidage en pivotement (14) coopère avec la patte anti-translation (12) lors de l'assemblage mécanique de la plaque de fermeture (10) dans le logement (18) du guide-pêne (5), la butée axiale (13) étant agencée en fin de course de la rainure de guidage en pivotement (14).

7. Antivol selon l'une des revendications 2 à 6, **caractérisé en ce que** la plaque de fermeture (10) comporte au moins un ergot anti-pivotement (23) coopérant avec une encoche complémentaire (11) ménagée dans le logement (18) du guide-pêne (5).

8. Antivol selon les revendications 3 et 7, **caractérisé en ce que** l'encoche (11) présente une ouverture angulaire délimitée par une butée radiale (11a) permettant le pivotement de l'ergot anti-pivotement (23) jusqu'à la butée radiale (11a) sous l'effet de la sollicitation en torsion lors de l'assemblage mécanique de la plaque de fermeture (10) dans le logement (18) du guide-pêne (5).

9. Antivol selon les revendications 4 et 8, **caractérisé en ce que** la butée radiale (11a) coopère avec l'ergot anti-pivotement (23) lorsque la patte anti-translation (12) coopère avec la butée axiale (13).

10. Antivol selon l'une des revendications 7 à 9, **caractérisé en ce qu'**en position assemblée, l'ergot anti-pivotement (23) est superposé avec un nez radial (21) de l'élément de blocage (16).

11. Antivol selon les revendications 7 à 10, **caractérisé en ce que** l'élément de blocage (16) est fixé à la plaque de fermeture (10) avec une orientation prédéterminée par rapport à l'angle souhaité de précontrainte en torsion.

12. Antivol selon l'une des revendications précédentes comprenant un corps d'antivol (3), un module antivol (6) comportant le guide-pêne (5), le pêne (4) et un moyen de supercondamnation (15), ledit module antivol (6) étant logé dans le corps d'antivol (3) et le corps d'antivol (3) bloquant la plaque de fermeture (10) contre le logement (18) du guide-pêne (5).

13. Procédé de montage d'un antivol selon l'une des revendications précédentes, **caractérisé en ce qu'**on assemble mécaniquement la plaque de fermeture (10) au logement (18) du guide-pêne (5) pour retenir le pivotement et la translation de la plaque de fermeture (10) par rapport au guide-pêne (5) et pour entraîner la sollicitation en translation et en torsion dudit élément de blocage (16).

14. Procédé de montage selon la revendication 13, **caractérisé en ce qu'**on assemble la plaque de fermeture (10) dans le logement par pivotement et translation de la plaque de fermeture (10) dans le logement (18) du guide-pêne (5).

15. Procédé de montage selon la revendication 14, **caractérisé en ce qu'**il comporte :
- une première étape dans laquelle on tourne et on pousse la plaque de fermeture (10) vers le guide-pêne (5) pour entraîner la sollicitation en translation et en torsion dudit élément de blocage (16), en pivotant la plaque de fermeture (10) au-delà de la sollicitation en torsion souhaitée,
- une deuxième étape dans laquelle on relâche la contrainte en pivotement en maintenant la contrainte en compression pour autoriser le pivotement de la plaque de fermeture (10) dans le logement (18) sous l'effet de la sollicitation en torsion jusqu'à bloquer la plaque de fermeture (10) en pivotement et en translation.

16. Procédé de montage d'un antivol selon l'une des revendications 13 à 15, **caractérisé en ce qu'**il comporte une troisième étape dans laquelle on insère le module d'antivol (6) assemblé dans le corps d'antivol (3).

## Patentansprüche

1. Lenkradsicherheitsschloss für ein Kraftfahrzeug mit Supersperrstellung, umfassend:
- eine Riegelführung (5),
- einen Riegel (4), der in der Riegelführung (5) zwischen einer freigegebenen Position, in der er dazu bestimmt ist, auf Abstand zu einer Lenksäule angeordnet zu sein, und einer verriegelten Position beweglich montiert ist, in der er dazu bestimmt ist, die besagte Säule zu blockieren,
- ein Mittel zur Supersperrstellung (15), ein Blockierelement (16) umfassend, das konfiguriert ist, um den Riegel (4) in der verriegelten Position zu blockieren, wobei das besagte Blockierelement (16) in Richtung des besagten Riegels (4) torsions- und translationsbeaufschlagt ist und in der freigegebenen Position in einer Aufnahme (18) der Riegelführung (5) auf Abstand zum Riegel (4) aufgenommen wird,
**dadurch gekennzeichnet, dass** das Mittel zur Supersperrstellung (15) darüber hinaus eine Schließplatte (10) umfasst, die durch eine mechanische Zusammensetzung mit der Aufnahme (18) der Riegelführung (5) zusammenwirkt, um den Schwenk und die Translation der Schließplatte (10) im Verhältnis zur Riegelführung (5) zurückzuhalten und um die Translations- und Torsionsbeaufschlagung des besagten Blockierelements (16) herbeizuführen.

2. Sicherheitsschloss nach Anspruch 1, **dadurch gekennzeichnet, dass** die Schließplatte (10) und die Aufnahme (18) der Riegelführung (5) ergänzende Mittel zur mechanischen Zusammensetzung aufweisen, die konfiguriert sind, um die Schließplatte (10) in der Aufnahme (18) durch einen Schwenk und Translation der Schließplatte (10) in der Aufnahme (18) der Riegelführung (5) zusammenzusetzen.

3. Sicherheitsschloss nach Anspruch 2, **dadurch gekennzeichnet, dass** die ergänzenden Mittel zur mechanischen Zusammensetzung konfiguriert sind, um mit dem Blockierelement (16) zusammenzuwirken, sodass die elastische Torsionsrückstellung des Blockierelements (16) für den Schwenk der Schließplatte (10) in Richtung der zusammengesetzten Position der Schließplatte (10) sorgt.

4. Sicherheitsschloss nach einem der Ansprüche 2 oder 3, **dadurch gekennzeichnet, dass** die Schließplatte (10) zumindest eine Translationssicherungslasche (12) umfasst, die sich über die Translationsachse (A) des Blockierelements (16) erstreckt und deren querlaufender Vorsprung (12a) mit einem axialen Anschlag (13) zusammenwirkt, der in der Aufnahme (18) der Riegelführung (5) angebracht ist.

5. Sicherheitsschloss nach einem der Ansprüche 2 bis 4, **dadurch gekennzeichnet, dass** eine Schwenkführungsnut (14) in Richtung der zusammengesetzten Position der Schließplatte (10) in der Aufnahme (18) angebracht ist.

6. Sicherheitsschloss nach den Ansprüchen 4 und 5, **dadurch gekennzeichnet, dass** die Schwenkführungsnut (14) bei der mechanischen Zusammensetzung der Schließplatte (10) in der Aufnahme (18) der Riegelführung (5) mit der Translationssicherungslasche (12) zusammenwirkt, wobei der axiale Anschlag (13) in der Endlage der Schwenkführungsnut (14) angeordnet ist.

7. Sicherheitsschloss nach einem der Ansprüche 2 bis 6, **dadurch gekennzeichnet, dass** die Schließplatte (10) zumindest einen Schwenksicherungsnocken (23) umfasst, der mit einer ergänzenden Auskerbung (11) zusammenwirkt, die in der Aufnahme (18) der Riegelführung (5) angebracht ist.

8. Sicherheitsschloss nach den Ansprüchen 3 und 7, **dadurch gekennzeichnet, dass** die Auskerbung (11) eine Winkelöffnung aufweist, die durch einen radialen Anschlag (11a) eingegrenzt wird, der den Schwenk des Schwenksicherungsnockens (23) bis zum radialen Anschlag (11a) unter der Wirkung der Torsionsbeaufschlagung bei der mechanischen Zusammensetzung der Schließplatte (10) in der Aufnahme (18) der Riegelführung (5) erlaubt.

9. Sicherheitsschloss nach den Ansprüchen 4 und 8, **dadurch gekennzeichnet, dass** der radiale Anschlag (11a) mit dem Schwenksicherungsnocken (23) zusammenwirkt, wenn die Translationssicherungslasche (12) mit dem axialen Anschlag (13) zusammenwirkt.

10. Sicherheitsschloss nach einem der Ansprüche 7 bis 9, **dadurch gekennzeichnet, dass** der Schwenksicherungsnocken (23) in der zusammengesetzten Position mit einer radialen Nase (21) des Blockierelements (16) überlagert ist.

11. Sicherheitsschloss nach den Ansprüchen 7 bis 10, **dadurch gekennzeichnet, dass** das Blockierelement (16) mit einer vorbestimmten Orientierung im Verhältnis zum gewünschten Torsionsvorspannungswinkel an der Schließplatte (10) befestigt ist.

12. Sicherheitsschloss nach einem der vorhergehenden Ansprüche, einen Sicherheitsschlosskörper (3) umfassend, ein Sicherheitsschlossmodul (6), welches die Riegelführung (5), den Riegel (4) und ein Mittel zur Supersperrstellung (15) enthält, wobei das besagte Sicherheitsschlossmodul (6) im Sicherheitsschlosskörper (3) untergebracht ist und der Sicherheitsschlosskörper (3) die Schließplatte (10) gegen die Aufnahme (18) der Riegelführung (5) blockiert.

13. Montageverfahren für ein Sicherheitsschloss nach einem der vorhergehenden Ansprüche, **dadurch gekennzeichnet, dass** man die Schließplatte (10) mit der Aufnahme (18) der Riegelführung (5) mechanisch zusammensetzt, um den Schwenk und die Translation der Schließplatte (10) im Verhältnis zur Riegelführung (5) zurückzuhalten und um die Translations- und Torsionsbeaufschlagung des besagten Blockierelements (16) herbeizuführen.

14. Montageverfahren nach Anspruch 13, **dadurch gekennzeichnet, dass** man die Schließplatte (10) in der Aufnahme durch Schwenk und Translation der Schließplatte (10) in der Aufnahme (18) der Riegelführung (5) zusammensetzt.

15. Montageverfahren nach Anspruch 14, **dadurch gekennzeichnet, dass** es umfasst:
- einen ersten Schritt, bei dem man die Schließplatte (10) in Richtung der Riegelführung (5) dreht und schiebt, um die Translations- und Torsionsbeaufschlagung des besagten Blockierelements (16) herbeizuführen, indem man die Schließplatte (10) über die gewünschte Torsionsbeaufschlagung hinaus schwenkt,
- einen zweiten Schritt, bei dem man die Schwenkbeanspruchung löst während man die Komprimierbeanspruchung beibehält, um den Schwenk der Schließplatte (10) in der Aufnahme (18) unter der Wirkung der Torsionsbeaufschlagung freizugeben, bis der Schwenk und die Translation der Schließplatte (10) blockiert werden.

16. Montageverfahren eines Sicherheitsschlosses nach einem der Ansprüche 13 bis 15, **dadurch gekennzeichnet, dass** es einen dritten Schritt umfasst, bei dem man das zusammengesetzte Sicherheitsschlossmodul (6) in den Sicherheitsschlosskörper (3) einführt.

## Claims

1. A steering anti-theft with deadlocking for a motor vehicle comprising:
- a bolt guide (5),
- a bolt (4) movably mounted in the bolt guide (5) between an unlocked position in which it is intended to be disposed away from a steering column and a locked position in which it is intended to block said column,
- a deadlocking means (15) including a blocking element (16) configured to block the bolt (4) in the locked position, said blocking element (16) being biased in torsion and in translation toward said bolt (4) and received in a housing (18) of the bolt guide (5) away from the bolt (4) in the unlocked position,
**characterized in that** the deadlocking means (15) further includes a closure plate (10) cooperating by mechanical assembly with the housing (18) of the bolt guide (5) to retain the pivoting and the translation of the closure plate (10) relative to the bolt guide (5) and to cause the translational and torsional biasing of said blocking element (16).

2. The anti-theft according to claim 1, **characterized in that** the closure plate (10) and the housing (18) of the bolt guide (5) have complementary mechanical assembly means configured to assemble the closure plate (10) in the housing (18) by pivoting and translation of the closure plate (10) in the housing (18) of the bolt guide (5).

3. The anti-theft according to claim 2, **characterized in that** the complementary mechanical assembly means are configured to cooperate with the blocking element (16) so that the torsional elastic return of the blocking element (16) causes the pivoting of the closure plate (10) toward the assembled position of the closure plate (10).

4. The anti-theft according to any of claims 2 or 3, **characterized in that** the closure plate (10) includes at least one anti-translation leg (12) extending in the axis of translation (A) of the blocking element (16) and whose transverse protuberance (12a) cooperates with an axial stop (13) formed in the housing (18) of the bolt guide (5).

5. The anti-theft according to any of claims 2 to 4, **characterized in that** a pivoting guide groove (14) toward the assembled position of the closure plate (10) is formed in the housing (18).

6. The anti-theft according to claims 4 and 5, **characterized in that** the pivoting guide groove (14) cooperates with the anti-translation leg (12) during the mechanical assembly of the closure plate (10) in the housing (18) of the bolt guide (5), the axial stop (13) being arranged at the end of travel of the pivoting guide groove (14).

7. The anti-theft according to any of claims 2 to 6, **characterized in that** the closure plate (10) includes at least one anti-pivoting lug (23) cooperating with a complementary notch (11) formed in the housing (18) of the bolt guide (5).

8. The anti-theft according to claims 3 and 7, **characterized in that** the notch (11) has an angular opening delimited by a radial stop (11a) allowing the pivoting of the anti-pivoting lug (23) up to the radial stop (11a) under the effect of the torsional biasing during the mechanical assembly of the closure plate (10) in the housing (18) of the bolt guide (5).

9. The anti-theft according to claims 4 and 8, **characterized in that** the radial stop (11a) cooperates with the anti-pivoting lug (23) when the anti-translation leg (12) cooperates with the axial stop (13).

10. The anti-theft according to any of claims 7 to 9, **characterized in that**, in the assembled position, the anti-pivoting lug (23) is superimposed with a radial nose (21) of the blocking element (16).

11. The anti-theft according to claims 7 to 10, **characterized in that** the blocking element (16) is fastened to the closure plate (10) with a predetermined orientation with respect to the desired angle of torsional preload.

12. The anti-theft according to any of the preceding claims, comprising an anti-theft body (3), an anti-theft module (6) including the bolt guide (5), the bolt (4) and a deadlocking means (15), said anti-theft module (6) being housed in the anti-theft body (3) and the anti-theft body (3) blocking the closure plate (10) against the housing (18) of the bolt guide (5).

13. A method for mounting an anti-theft according to any of the preceding claims, **characterized in that** the closure plate (10) is mechanically assembled to the housing (18) of the bolt guide (5) to retain the pivoting and the translation of the closure plate (10) relative to the bolt guide (5) and to cause the translational and torsional biasing of said blocking element (16).

14. The mounting method according to claim 13, **characterized in that** the closure plate (10) is assembled in the housing by pivoting and translation of the closure plate (10) in the housing (18) of the bolt guide (5).

15. The mounting method according to claim 14, **characterized in that** it includes:
- a first step in which the closure plate (10) is turned and pushed toward the bolt guide (5) to cause the translational and torsional biasing of said blocking element (16), by pivoting the closure plate (10) beyond the desired torsional biasing,
- a second step in which the pivoting load is released while holding the compression load to enable the pivoting of the closure plate (10) in the housing (18) under the effect of the torsional biasing until blocking the closure plate (10) in pivoting and in translation.

16. The anti-theft mounting method according to any of claims 13 to 15, **characterized in that** it includes a third step in which the assembled anti-theft module (6) is inserted in the anti-theft body (3).
